# FASCICULE DE BREVET EUROPEEN

(11) **EP 1 371 552 B1**
(45) Date de publication et mention de la délivrance du brevet: **08.06.2005**
(21) Numéro de dépôt: 03291075.4
(22) Date de dépôt: 05.05.2003
(51) Int. Cl.: B64C 7/00, B64C 9/02, B64C 9/32

(54) **Dispositif d'articulation d'un volet sur une surface aérodynamique d'aéronef**
Gelenkvorrichtung zur Verbindung einer Klappe zu einer aerodynamischen Fläche eines Luftfahrzeuges
Articulation device for connecting a flap to an aircraft aerodynamic surface

(30) Priorité: 13.06.2002 FR 0207266
(43) Date de publication de la demande: 17.12.2003
(73) Titulaire: AIRBUS France, 31060 Toulouse (FR)
(72) Inventeur: Milliere, Jérôme, 31490 Leguevin (FR)
(74) Mandataire: Bonnetat, Christian

(56) Documents cités:
- CH-A- 683 982
- FR-A- 2 718 707
- FR-A- 2 728 535

## Description

La présente invention concerne une surface aérodynamique d'aéronef avec au moins un volet et un dispositif d'articulation dudit volet sur ladite surface aérodynamique. Quoique non exclusivement, la présente invention est particulièrement appropriée aux volets déporteurs (spoilers) intégrés dans des logements prévus dans l'extrados des ailes d'un avion.

Dans les surfaces aérodynamiques connues, un volet (par exemple déporteur) a son bord avant en regard d'un bord arrière (par exemple le bord de fuite ou le bord d'un tel logement) de la surface aérodynamique correspondante (par exemple une aile) et le dispositif d'articulation comporte au moins deux ferrures portant ledit volet en faisant saillie vers l'avant par rapport audit bord avant du volet et pouvant pivoter, sous l'action de moyens d'actionnement (généralement des vérins), autour d'un axe commun porté par ladite surface aérodynamique et disposé du côté intérieur de celle-ci. Ainsi, ledit volet peut prendre :
- soit une position rétractée, pour laquelle la face externe (par exemple l'extrados) dudit volet est en prolongement aérodynamique de la face externe (par exemple l'extrados) de ladite surface aérodynamique ;
- soit des positions déployées, pour lesquelles ledit volet est braqué et se trouve en saillie par rapport à ladite face externe de la surface aérodynamique.

Dans une telle surface aérodynamique, pour éviter que la fente entre ledit bord arrière de la surface aérodynamique et ledit bord avant dudit volet ne soit trop large, ce qui engendrerait une traînée importante, on prévoit que ledit bord arrière de la surface aérodynamique comporte des échancrures dans lesquelles peuvent pénétrer lesdites ferrures en position déployée dudit volet. De plus, chaque ferrure comporte une partie d'obturation, qui fait partie intégrante de ladite ferrure, est fabriquée avec elle et est identique pour toutes les ferrures et qui, en position rétractée du volet, se trouve à l'intérieur de l'échancrure correspondante, à fleur des faces externes de la surface aérodynamique et du volet.

Entre lesdites ferrures, on prévoit un joint, par exemple de type boudin, porté par ledit bord arrière de la surface aérodynamique et obturant ladite fente existant entre lesdits bord avant et arrière, lorsque le volet est en position rétractée. En revanche, entre le bord desdites échancrures et les parties d'obturation desdites ferrures, il existe un jeu de fonctionnement nécessité par les tolérances d'assemblage et de fabrication, qu'il est impossible jusqu'à présent d'obturer et qui est cause d'une fuite aérodynamique engendrant une traînée parasite.

Une telle traînée parasite est relativement réduite et acceptable lorsque la dimension de l'avion est celle des avions commerciaux usuels. En revanche, pour des avions commerciaux de très grande dimension, elle devient inacceptable, car alors les volets sont eux-mêmes de grandes dimensions, notamment les ferrures, et le jeu doit être important pour absorber les tolérances d'assemblage et de fabrication et permettre le débattement desdits volets.

L'objet de la présente invention est donc de remédier à cet inconvénient en obturant de façon efficace le jeu de fonctionnement entre lesdites échancrures et lesdites ferrures en position rétractée dudit volet, sans gêner le déploiement dudit volet lorsque celui-ci doit devenir actif.

A cette fin, selon l'invention, la surface aérodynamique d'aéronef avec au moins un volet et un dispositif d'articulation dudit volet sur ladite surface aérodynamique, ledit volet ayant son bord avant en regard d'un bord arrière de ladite surface aérodynamique et ledit dispositif d'articulation comportant au moins deux ferrures portant ledit volet en faisant saillie vers l'avant par rapport audit bord avant et pouvant pivoter, sous l'action de moyens d'actionnement, autour d'un axe commun porté par ladite surface aérodynamique et disposé du côté intérieur de celle-ci pour faire prendre audit volet :
- soit une position rétractée, pour laquelle la face externe dudit volet est en prolongement aérodynamique de la face externe de ladite surface aérodynamique ;
- soit au moins une position déployée, pour laquelle ledit volet est braqué et se trouve en saillie par rapport à la face externe de ladite surface aérodynamique, ledit bord arrière de ladite surface aérodynamique comportant des échancrures dans lesquelles pénètrent lesdites ferrures en position déployée dudit volet,
est remarquable en ce que :
- la partie de chaque ferrure, qui se trouve en regard de l'échancrure correspondante en position rétractée dudit volet, est en retrait vers l'intérieur par rapport aux faces externes de la surface aérodynamique et du volet ;
- à chaque échancrure est associé un obturateur plat dont la forme correspond à celle de ladite échancrure ;
- chaque obturateur est porté par une tringlerie articulée sur ladite surface aérodynamique et sur ledit volet, de façon telle que :
   . en position rétractée dudit volet, ladite tringlerie impose audit obturateur une position d'obturation, pour laquelle ledit obturateur est disposé dans ladite échancrure en assurant la continuité aérodynamique entre ladite surface aérodynamique et ledit volet ; et
   . en position déployée dudit volet, ladite tringlerie impose audit obturateur une position déportée vers l'extérieur, pour laquelle ledit obturateur libère ladite échancrure en permettant la rotation dudit volet par rapport à ladite surface aérodynamique.

De préférence, ledit obturateur est fixé de façon amovible et/ou réglable à ladite tringlerie.

Ainsi, grâce à ces dispositions conformes à la présente invention, la position et/ou la dimension de chaque obturateur plat peut être adaptée, compte tenu du jeu de fonctionnement réel, à l'échancrure particulière dans laquelle il doit être logé, afin d'optimiser et/ou de minimiser la fente nécessaire entre le bord de l'échancrure et lui-même. Pour faciliter la mise en oeuvre de cette idée maîtresse de la présente invention, ledit obturateur peut être choisi parmi un jeu d'obturateurs de dimensions différentes, fabriqués à l'avance et couvrant les différents cas de jeux, dus aux tolérances de montage et rencontrés dans la fabrication de l'aéronef.

Dans un mode de réalisation, avantageux et particulièrement simple de tringlerie, celle-ci comporte :
- au moins une première bielle articulée, d'un côté, à ladite surface aérodynamique et portant, de l'autre côté, ledit obturateur ; et
- au moins une seconde bielle articulée, d'un côté, audit volet et, de l'autre côté, à ladite première bielle.

Avantageusement, ladite première bielle présente une forme contournée lui permettant d'envelopper, en position déployée dudit volet, le bord du fond de ladite échancrure.

Pour améliorer encore l'étanchéité entre ledit obturateur et le bord de l'échancrure correspondante, on peut prévoir :
- que le bord avant dudit obturateur porte un joint apte à obturer, en position rétractée du volet, la fente existant entre lui-même et le bord du fond de ladite échancrure ; et/ou
- que le bord arrière dudit obturateur porte un joint apte à obturer, en position rétractée du volet, la fente existant entre lui-même et le bord avant dudit volet.

Par ailleurs, afin d'éviter la multiplicité des obturateurs et des tringleries de commande associées, selon une autre particularité de la présente invention, on prévoit que :
- entre au moins deux échancrures consécutives, ledit bord arrière de la surface aérodynamique est éliminé de façon à constituer une échancrure globale ;
- la partie de chaque ferrure, qui se trouve en regard de ladite échancrure globale en position rétractée dudit volet, est en retrait vers l'intérieur par rapport aux faces externes de la surface aérodynamique et du volet ;
- à ladite échancrure globale, est associé un obturateur global plat dont la forme correspond à celle de ladite échancrure globale ;
- ledit obturateur global est porté par une tringlerie articulée sur ladite surface aérodynamique et sur ledit volet et telle que :
   . en position rétractée dudit volet, ladite tringlerie impose audit obturateur global une position d'obturation, pour laquelle ledit obturateur global est disposé dans ladite échancrure globale en assurant la continuité aérodynamique entre ladite surface aérodynamique et ledit volet ; et
   . en position déployée dudit volet, ladite tringlerie impose audit obturateur global une position déportée vers l'extérieur, pour laquelle ledit obturateur global libère ladite échancrure globale en permettant la rotation dudit volet par rapport à ladite surface aérodynamique.

Avantageusement, ledit obturateur global et ladite tringlerie peuvent comporter les particularités des obturateurs et des tringleries décrits ci-dessus.

On remarquera que le document FR-2 728 535 décrit un aérofrein monté sur la voilure d'un aéronef, entre un longeron arrière et un volet hypersustentateur et comprenant deux panneaux alignés avec la face d'extrados de la voilure, dans un état fermé de l'aérofrein. Dans l'état ouvert, ces deux panneaux sont jointifs et se comportent comme un panneau unique. Au contraire, dans les états intermédiaires, le panneau le plus proche du volet est plus braqué que l'autre panneau, de sorte qu'une fente est formée entre eux. Cette fente permet de limiter fortement les turbulences de part et d'autre de l'aérofrein, lorsque celui-ci est utilisé en vol à faible braquage.

Les figures du dessin annexé feront bien comprendre comment l'invention peut être réalisée. Sur ces figures, des références identiques désignent des éléments semblables.
La figure 1 est une vue en plan partielle, du dessus, d'une aile d'avion connue.
La figure 2 est une vue agrandie en coupe transversale selon la ligne II-II de la figure 1, au niveau d'une ferrure d'un volet déporteur de ladite aile, ce volet déporteur étant en position rétractée.
La figure 3 est une vue semblable à la figure 2, ledit volet déporteur étant en position déployée.
La figure 4 est une vue agrandie selon la flèche IV de la figure 2.
La figure 5 illustre, en vue semblable à la figure 4, un exemple de réalisation de la présente invention, appliquée aux volets déporteurs.
La figure 6 est une coupe agrandie selon la ligne VI-VI de la figure 5 ou de la figure 8.
La figure 7 est une vue semblable à la figure 6, le volet déporteur étant en position déployée.
La figure 8 illustre, en vue semblable à la figure 5, une variante de réalisation de la présente invention.

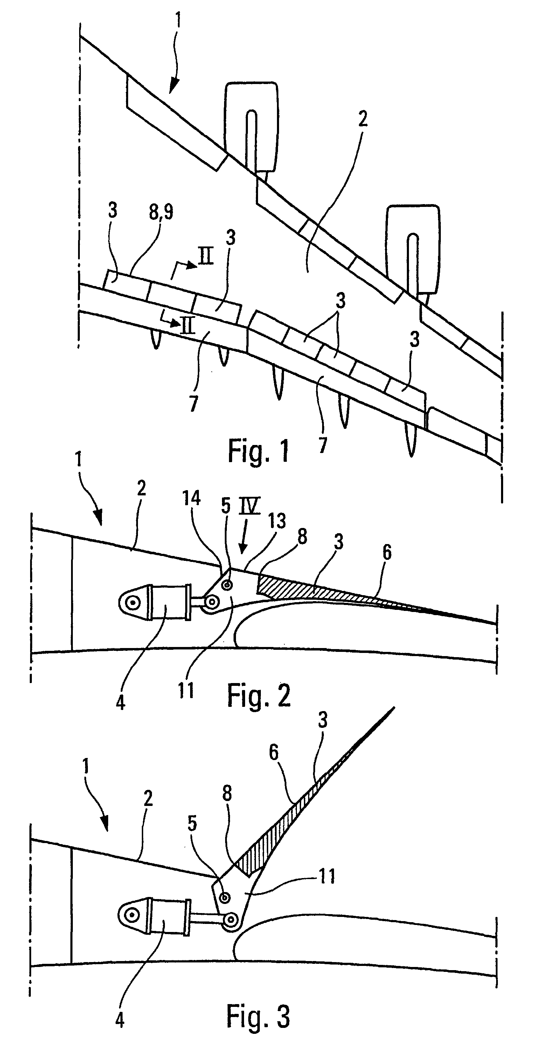

L'aile d'avion connue 1, représentée schématiquement et partiellement sur la figure 1, comporte, dans son extrados 2, une pluralité de volets déporteurs 3, généralement appelés spoilers dans la technique aéronautique. Ils constituent des surfaces aérodynamiques de contrôle pour l'avion, mobiles en rotation sous l'action de vérins 4 autour d'un axe 5 porté par l'aile, du côté intérieur à celle-ci.

En position rétractée (voir les figures 1, 2 et 4), ils s'intègrent dans l'extrados 2 avec leur propre extrados 6 en prolongement aérodynamique de ce dernier, et ils sont généralement disposés en avant des volets hypersustentateurs 7. En position déployée (voir la figure 3), ils entraînent une diminution de la portance et une augmentation de la traînée de l'aile 1, ce qui leur permet d'assurer différentes fonctions.

Ainsi, lesdits volets déporteurs 3 :
- par l'augmentation de la traînée, participent à la réduction de la vitesse de l'avion durant les phases d'atterrissage ou éventuellement de décollage, dans le cas de l'interruption de la procédure de décollage en cas de détection de problème ;
- permettent, en réduisant la portance, de plaquer l'avion au sol pour améliorer le freinage pendant la phase d'atterrissage ou d'interruption de décollage ;
- participent au contrôle du roulis en réduisant la portance d'une demi-voilure en vol ;
- permettent de réduire la vitesse de l'avion pendant le vol ou d'augmenter la pente de descente en cas de descente d'urgence ;
- aident à diminuer le moment d'encastrement voilure/fuselage (et donc la charge) aux forts facteurs de charge (manoeuvre, rafales) en modifiant, le long de la voilure, la répartition de la portance ;
- permettent, par un effet dissymétrique, de créer un moment de lacet et participent, ainsi, à contrer les effets d'une panne moteur au sol pendant la phase de décollage.

Ces différentes fonctions remplies par les volets déporteurs correspondent à des conditions temporaires et à des moments bien particuliers du vol de l'avion, de sorte que, pendant la plus grande partie du vol de l'avion, ils n'interviennent pas en étant rétractés et leur présence doit alors engendrer une traînée aussi faible que possible.

Aussi, lorsque lesdits volets déporteurs ne sont pas utilisés, c'est-à-dire la plupart du temps de vol, ils doivent être parfaitement intégrés à l'extrados 2 de l'aile 1, ce qui soulève quelques difficultés.

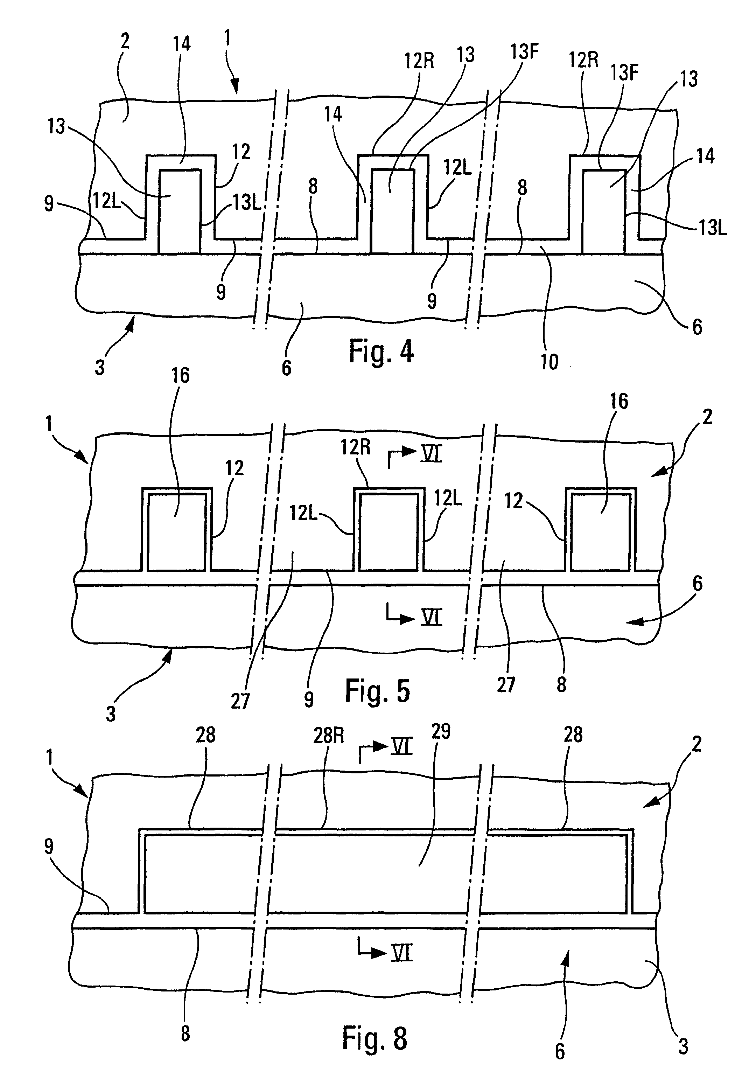

En effet, chaque volet déporteur 3 est, d'une part, disposé de façon que son bord avant 8 soit disposé en regard d'un bord arrière 9 de ladite aile 1 (lesdits bords 8 et 9 étant parallèles à l'axe 5) en ménageant entre eux une fente 10 et, d'autre part, porté par au moins deux ferrures 11, faisant saillie vers l'avant, en direction de l'intérieur de l'aile 1 et montées pivotantes autour de l'axe 5. Le bord arrière 9 de l'aile 1 comporte des échancrures 12, avec deux bords latéraux 12L et un bord de fond 12R, permettant d'y loger lesdites ferrures 11 en position déployée des volets déporteurs 3 (figure 3). Chaque ferrure 11 comporte une partie d'obturation 13, avec deux bords latéraux 13L et un bord avant 13F, qui obture grossièrement les échancrures 12 en position rétractée du volet déporteur 3 en formant une fente périphérique 14 autour de ce dernier et en se trouvant à fleur des extrados 2 et 6 (figure 4).

De façon connue et non représentée, entre les échancrures 12, l'étanchéité entre le bord avant 8 d'un volet déporteur 3 et le bord arrière 9 de l'aile 1 est assurée par un joint boudin non représenté.

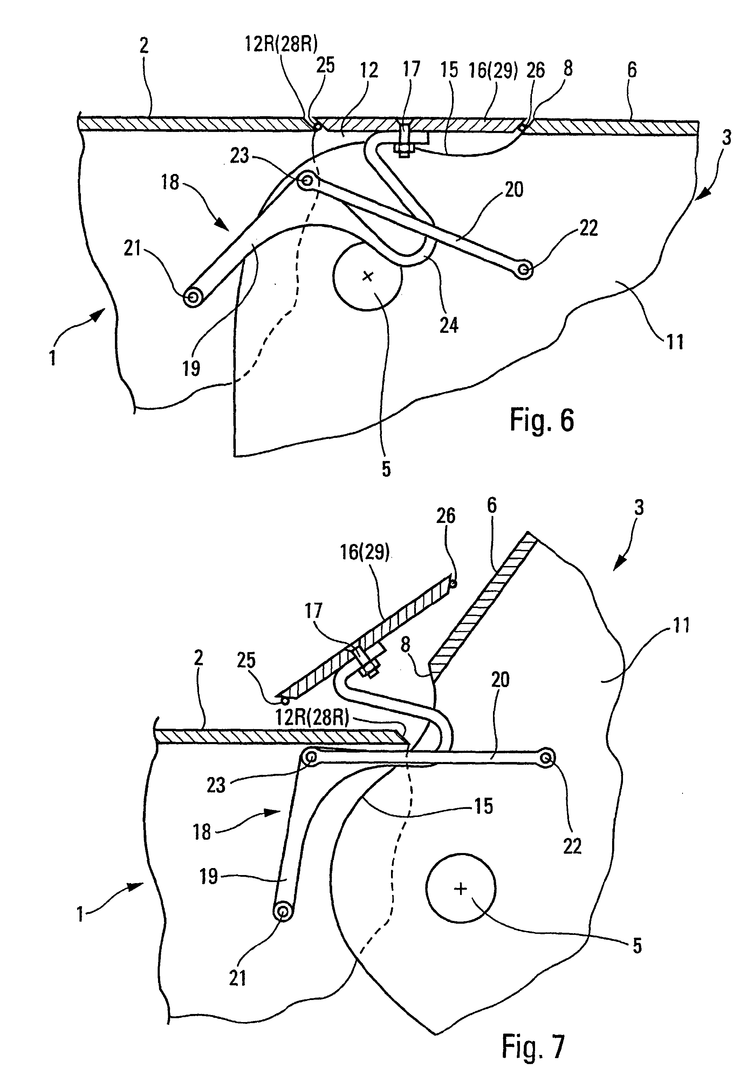

La technique antérieure ayant été rappelée ci-dessus en regard des figures 1 à 4, on décrit maintenant ci-après un mode de réalisation de la présente invention, au moyen des figures 5 à 8.

En se reportant tout d'abord aux figures 5 à 7, on peut constater que la partie 15 de chaque ferrure 11, qui se trouve en regard de l'échancrure 12 correspondante en position rétractée d'un volet 3, est (contrairement à la partie 13 décrite ci-dessus) en retrait vers l'intérieur par rapport aux extrados 2 et 6 de l'aile 1 et du volet 3. De plus, à chaque échancrure 12 est associé un obturateur plat individuel 16, choisi parmi une pluralité d'obturateurs de dimensions différentes pour le fait que, compte tenu des jeux de fonctionnement indispensables, il obture au mieux l'échancrure particulière 12 dans laquelle il est logé.

Comme cela est illustré par les figures 6 et 7, chaque obturateur individuel 16 est rapporté, grâce à des moyens de fixation amovible 17, tels que des vis ou analogues, à une tringlerie articulée 18 (décrite plus en détail ci-après), qui lui permet :
- en position rétractée du volet 3, de prendre une position d'obturation (voir les figures 5 et 6), pour laquelle ledit obturateur 3 est disposé dans l'échancrure correspondante 12 en assurant la continuité aérodynamique entre les extrados 2 et 6 ;
- en position déployée du volet 3, de prendre une position déportée vers l'extérieur (voir la figure 7), disposée dans l'angle dièdre formé par les extrados 2 et 6, pour laquelle ledit obturateur 3 libère l'échancrure associée 12, pour permettre à la ferrure 11 d'y pénétrer, ce qui rend possible la rotation dudit volet 3 par rapport à l'aile 1.

De préférence, la position dudit obturateur 16 est réglable par rapport aux moyens de fixation amovible 17 (par exemple, grâce à un trou oblong ou plusieurs trous pratiqués dans ledit obturateur), afin de permettre d'ajuster la position dudit obturateur 16 par rapport à l'échancrure 12.

Dans l'exemple de réalisation des figures 6 et 7, la tringlerie 18 comporte au moins deux bielles 19 et 20. La bielle 19 est articulée, à son extrémité intérieure, autour d'un axe intérieur 21 solidaire de l'aile 1 et porte, à son extrémité extérieure, l'obturateur 16 correspondant qui y est fixé par les vis 17. La bielle 20 est, quant à elle, articulée à une extrémité autour d'un axe 22, intérieur audit volet 3, et, à son autre extrémité, à ladite bielle 19 autour d'un axe 23. La première bielle 19 présente une forme contournée, en boucle 24 dans sa partie médiane, pour pouvoir envelopper le bord 12R du fond de l'échancrure 12, en position déployée du volet 3 (voir la figure 7).

Pour améliorer encore les performances aérodynamiques des obturateurs 16, ceux-ci peuvent porter :
- sur leur bord avant, un joint 25 apte à obturer, en position rétractée du volet 3, la fente existant entre eux-mêmes et le bord de fond 12R des échancrures 12 ;
- sur leur bord arrière, un joint 26 apte à obturer, également en position rétractée du volet 3, la fente existant entre eux-mêmes et le bord avant 8 dudit volet 3.

Dans le mode de réalisation de la figure 8, on a éliminé les parties 27 du bord arrière 9 de l'aile 1 qui se trouvent entre plusieurs échancrures consécutives 12 (voir la figure 7) pour former une échancrure globale 28, avec un bord de fond 28R. De plus, on a remplacé les obturateurs 16 correspondants par un obturateur global 29 adapté à ladite échancrure globale 28. On comprendra aisément que les particularités décrites ci-dessus à propos des échancrures 12, des obturateurs 16 et de la tringlerie 18 sont applicables à l'échancrure globale 28, à l'obturateur global 29 et à la tringlerie pour actionner ce dernier.

## Revendications

1. Surface aérodynamique (1) d'aéronef avec au moins un volet (3) et un dispositif d'articulation dudit volet (3) sur ladite surface aérodynamique, ledit volet (3) ayant son bord avant (8) en regard d'un bord arrière (9) de ladite surface aérodynamique et ledit dispositif d'articulation comportant au moins deux ferrures (11) portant ledit volet (3) en faisant saillie vers l'avant par rapport audit bord avant (8) et pouvant pivoter, sous l'action de moyens d'actionnement (4), autour d'un axe commun (5) porté par ladite surface aérodynamique (1) et disposé du côté intérieur de celle-ci, pour faire prendre audit volet (3) :
- soit une position rétractée, pour laquelle la face externe (6) dudit volet (3) est en prolongement aérodynamique de la face externe (2) de ladite surface aérodynamique (1) ;
- soit au moins une position déployée, pour laquelle ledit volet (3) est braqué et se trouve en saillie par rapport à la face externe (2) de la dite surface aérodynamique (1), ledit bord arrière (9) de ladite surface aérodynamique (1) comportant des échancrures (12) dans lesquelles pénètrent lesdites ferrures (11) en position déployée dudit volet (3),
**caractérisée en ce que** :
- la partie (15) de chaque ferrure (11), qui se trouve en regard de l'échancrure (12) correspondante en position rétractée dudit volet (3), est en retrait vers l'intérieur par rapport aux faces externes (2, 6) de la surface aérodynamique et du volet ;
- à chaque échancrure (12) est associé un obturateur plat (16) dont la forme correspond à celle de ladite échancrure (12) ;
- chaque obturateur (16) est porté par une tringlerie articulée (18) sur ladite surface aérodynamique (1) et sur ledit volet (3), de façon telle que :
. en position rétractée dudit volet (3), ladite tringlerie (18) impose audit obturateur (16) une position d'obturation, pour laquelle ledit obturateur (16) est disposé dans ladite échancrure (12) en assurant la continuité aérodynamique entre ladite surface aérodynamique et ledit volet ; et
. en position déployée dudit volet (3), ladite tringlerie (18) impose audit obturateur (16) une position déportée vers l'extérieur, pour laquelle ledit obturateur (16) libère ladite échancrure (12) en permettant la rotation dudit volet (3) par rapport à ladite surface aérodynamique (1).

2. Surface aérodynamique selon la revendication 1,
**caractérisée en ce que** ledit obturateur (16) est fixé de façon amovible à ladite tringlerie (18).

3. Surface aérodynamique selon l'une des revendications 1 ou 2,
**caractérisée en ce que** ledit obturateur (16) est fixé de façon réglable à ladite tringlerie (18).

4. Surface aérodynamique selon l'une des revendications 1 à 3,
**caractérisée en ce que** ledit obturateur (16) est choisi parmi un jeu d'obturateurs de dimensions différentes.

5. Surface aérodynamique selon l'une des revendications 1 à 4,
**caractérisée en ce que** ladite tringlerie (18) comporte :
- au moins une première bielle (19) articulée, d'un côté, à ladite surface aérodynamique (1) et portant, de l'autre côté, ledit obturateur (16), et
- au moins une seconde bielle (20) articulée, d'un côté, audit volet (3) et, de l'autre côté, à ladite première bielle (19).

6. Surface aérodynamique selon la revendication 5,
**caractérisée en ce que** ladite première bielle (19) présente une forme contournée lui permettant d'envelopper, en position déployée dudit volet (3), le bord (12R) du fond de ladite échancrure (12).

7. Surface aérodynamique selon l'une quelconque des revendications 1 à 6,
**caractérisée en ce que** le bord avant dudit obturateur (16) porte un joint (25) apte à obturer, en position rétractée du volet (3), la fente existant entre lui-même et le bord du fond (12R) de ladite échancrure (12).

8. Surface aérodynamique selon l'une quelconque des revendications 1 à 7,
**caractérisée en ce que** le bord arrière dudit obturateur (16) porte un joint (26) apte à obturer, en position rétractée du volet (3), la fente existant entre lui-même et le bord avant (8) dudit volet (16).

9. Surface aérodynamique (1) d'aéronef avec au moins un volet (3) et un dispositif d'articulation dudit volet (3) sur ladite surface aérodynamique, ledit volet (3) ayant son bord avant (8) en regard d'un bord arrière (9) de ladite surface aérodynamique (1) et ledit dispositif d'articulation comportant au moins deux ferrures (11) portant ledit volet (3) en faisant saillie vers l'avant par rapport audit bord avant (8) et pouvant pivoter, sous l'action de moyens d'actionnement (4), autour d'un axe commun (5) porté par ladite surface aérodynamique (1) et disposé du côté intérieur de celle-ci, pour faire prendre audit volet (3):
- soit une position rétractée, pour laquelle la face externe (6) dudit volet (3) est en prolongement aérodynamique de la face externe (2) de ladite surface aérodynamique (1) ;
- soit au moins une position déployée, pour laquelle ledit volet (3) est braqué et se trouve en saillie par rapport à la face externe (2) de ladite surface aérodynamique (1), ledit bord arrière (9) de ladite surface aérodynamique (1) comportant des échancrures (12) dans lesquelles pénètrent lesdites ferrures (11) en position déployée dudit volet (3),
**caractérisée en ce que** :
- entre au moins deux échancrures consécutives (12), ledit bord arrière (9) de la surface aérodynamique (1) est éliminé de façon à constituer une échancrure globale (28) ;
- la partie (15) de chaque ferrure (11), qui se trouve en regard de ladite échancrure globale (28) en position rétractée dudit volet (3), est en retrait vers l'intérieur par rapport aux faces externes (2 et 6) de la surface aérodynamique (1) et du volet (3) ;
- à ladite échancrure globale (28) est associé un obturateur global plat (29) dont la forme correspond à celle de ladite échancrure globale ;
- ledit obturateur global (29) est porté par une tringlerie (18) articulée sur ladite surface aérodynamique (1) et sur ledit volet (3) et telle que :
. en position rétractée dudit volet (3), ladite tringlerie (18) impose audit obturateur global (29) une position d'obturation, pour laquelle ledit obturateur global (29) est disposé dans ladite échancrure globale (28) en assurant la continuité aérodynamique entre ladite surface aérodynamique (1) et ledit volet (3); et
. en position déployée dudit volet (3), ladite tringlerie (18) impose audit obturateur global (29) une position déportée vers l'extérieur pour laquelle ledit obturateur global (29) libère ladite échancrure globale (28) en permettant la rotation dudit volet (3) par rapport à ladite surface aérodynamique (1).

10. Surface aérodynamique selon la revendication 9,
**caractérisée en ce que** ledit obturateur global (29) est fixé de façon amovible à ladite tringlerie.

11. Surface aérodynamique selon l'une des revendications 9 ou 10,
**caractérisée en ce que** ledit obturateur global (29) est fixé de façon réglable à ladite tringlerie (18).

12. Surface aérodynamique selon l'une des revendications 9 à 11,
**caractérisée en ce que** ledit obturateur global (29) est choisi parmi un jeu d'obturateurs globaux de dimensions différentes.

13. Surface aérodynamique selon l'une des revendications 9 à 12,
**caractérisée en ce que** ladite tringlerie (18) comporte :
- au moins une première bielle (19) articulée, d'un côté, à ladite surface aérodynamique (1) et portant, de l'autre côté, ledit obturateur global (28), et
- au moins une seconde bielle (20) articulée, d'un côté, audit volet (3) et, de l'autre côté, à ladite première bielle (19).

14. Surface aérodynamique selon la revendication 13,
**caractérisée en ce que** ladite première bielle (19) présente une forme contournée lui permettant d'envelopper, en position déployée dudit volet, le bord du fond (28R) de ladite échancrure globale (28).

15. Surface aérodynamique selon l'une quelconque des revendications 9 à 14,
**caractérisée en ce que** le bord avant dudit obturateur global (28) porte un joint (25) apte à obturer, en position rétractée du volet, la fente existant entre lui-même et le bord du fond (28R) de ladite échancrure globale (28).

16. Surface aérodynamique selon l'une quelconque des revendications 9 à 15,
**caractérisée en ce que** le bord arrière dudit obturateur (28) porte un joint (26) apte à obturer, en position rétractée du volet, la fente existant entre lui-même et le bord avant (8) dudit volet (3).

## Patentansprüche

1. Aerodynamische Fläche (1) eines Luftfahrzeuges mit mindestens einer Klappe (3) und einer Gelenkvorrichtung zum Anlenken der Klappe (3) an die aerodynamische Fläche, wobei sich die Vorderkante (8) der Klappe (3) gegenüber einer Hinterkante (9) der aerodynamischen Fläche befindet und die Gelenkvorrichtung mindestens zwei Beschläge (11) aufweist, welche die Klappe (3) tragen, indem sie zur Vorderkante (8) hin einen Vorsprung bilden, und welche sich unter der Wirkung von Antriebsmitteln (4) um eine gemeinsame Achse (5) drehen können, die von der aerodynamischen Fläche (1) getragen wird und in ihrem Inneren liegt, um die Klappe (3):
- entweder eine eingefahrene Position einnehmen zu lassen, in der die Außenseite (6) der Klappe (3) der aerodynamische Fortsatz der Außenseite (2) der aerodynamischen Fläche (1) ist; oder
- mindestens eine ausgefahrene Position einnehmen zu lassen, in der die Klappe (3) aufgestellt ist und über die Außenseite (2) der aerodynamischen Fläche (1) heraussteht, wobei die Hinterkante (9) der aerodynamischen Fläche (1) Einbuchtungen (12) aufweist, welche die Beschläge (11) in ausgefahrener Position der Klappe (3) aufnehmen,
wobei:
- der Teil (15) jedes Beschlags (11), der sich in eingefahrener Position der Klappe (3) gegenüber der entsprechenden Einbuchtung (12) befindet, in Bezug zu den Außenseiten (2, 6) der aerodynamischen Fläche und der Klappe nach innen ragt;
- jeder Einbuchtung (12) eine flache Abdeckung (16) zugeordnet ist, deren Form der Form der Einbuchtung (12) entspricht;
- jede Abdeckung (16) von einem Gestänge (18) getragen wird, das an die aerodynamische Fläche (1) und die Klappe (3) angelenkt ist, so dass:
. das Gestänge (18) die Abdeckung (16) in eingefahrener Position der Klappe (3) in eine Verschlussposition zwingt, in der sich die Abdeckung (16) in der Einbuchtung (12) befindet und somit die aerodynamische Kontinuität zwischen der aerodynamischen Fläche und der Klappe sicherstellt; und
. das Gestänge (18) die Abdeckung (16) in ausgefahrener Position der Klappe (3) in eine nach außen versetzte Position zwingt, in der die Abdeckung (16) die Einbuchtung (12) freigibt, indem sie Drehbewegungen der Klappe (3) in Bezug zur aerodynamischen Fläche (1) erlaubt.

2. Aerodynamische Fläche nach Anspruch 1,
wobei die Abdeckung (16) auf lösbare Weise am Gestänge (18) befestigt ist.

3. Aerodynamische Fläche nach einem der Ansprüche 1 oder 2,
wobei die Abdeckung (16) auf verstellbare Weise am Gestänge (18) befestigt ist.

4. Aerodynamische Fläche nach einem der Ansprüche 1 bis 3,
wobei die Abdeckung (16) aus einer Gruppe von Abdeckungen unterschiedlicher Größen gewählt wird.

5. Aerodynamische Fläche nach einem der Ansprüche 1 bis 4,
wobei das Gestänge (18) Folgendes aufweist:
- mindestens eine erste Stange (19), die auf der einen Seite an die aerodynamische Fläche (1) angelenkt ist und auf der anderen Seite die Abdeckung (16) trägt; und
- mindestens eine zweite Stange (20), die auf der einen Seite an die Klappe (3) und auf der anderen Seite an die erste Stange (19) angelenkt ist.

6. Aerodynamische Fläche nach Anspruch 5,
wobei die erste Stange (19) eine gewundene Form aufweist, die es ihr erlaubt, sich in ausgefahrener Position der Klappe (3) um die Hinterkante (12R) der Einbuchtung (12) zu legen.

7. Aerodynamische Fläche nach einem der Ansprüche 1 bis 6,
wobei die Vorderkante der Abdeckung (16) eine Dichtung (25) aufweist, die fähig ist, in eingefahrener Position der Klappe (3) den Spalt zu verschließen, der sich zwischen ihr selbst und der Hinterkante (12R) der Einbuchtung (12) befindet.

8. Aerodynamische Fläche nach einem der Ansprüche 1 bis 7,
wobei die Hinterkante der Abdeckung (16) eine Dichtung (26) aufweist, die fähig ist, in eingefahrener Position der Klappe (3) den Spalt zu verschließen, der sich zwischen ihr selbst und der Vorderkante (8) der Klappe (16) befindet.

9. Aerodynamische Fläche (1) eines Luftfahrzeuges mit mindestens einer Klappe (3) und einer Gelenkvorrichtung zum Anlenken der Klappe (3) an die aerodynamische Fläche, wobei sich die Vorderkante (8) der Klappe (3) gegenüber einer Hinterkante (9) der aerodynamischen Fläche (1) befindet und die Gelenkvorrichtung mindestens zwei Beschläge (11) aufweist, welche die Klappe (3) tragen, indem sie zur Vorderkante (8) hin einen Vorsprung bilden, und welche sich unter der Wirkung von Antriebsmitteln (4) um eine gemeinsame Achse (5) drehen können, die von der aerodynamischen Fläche (1) getragen wird und in ihrem Inneren liegt, um die Klappe (3):
- entweder eine eingefahrene Position einnehmen zu lassen, in der die Außenseite (6) der Klappe (3) der aerodynamische Fortsatz der Außenseite (2) der aerodynamischen Fläche (1) ist; oder
- mindestens eine ausgefahrene Position einnehmen zu lassen, in der die Klappe (3) aufgestellt ist und über die Außenseite (2) der aerodynamischen Fläche (1) heraussteht, wobei die Hinterkante (9) der aerodynamischen Fläche (1) Einbuchtungen (12) aufweist, welche die Beschläge (11) in ausgefahrener Position der Klappe (3) aufnehmen,
wobei:
- zwischen mindestens zwei hintereinander liegenden Einbuchtungen (12) die Hinterkante (9) der aerodynamischen Fläche (1) beseitigt wird, so dass eine ganzheitliche Einbuchtung (28) entsteht;
- der Teil (15) jedes Beschlags (11), der sich in eingefahrener Position der Klappe (3) gegenüber der ganzheitlichen Einbuchtung (28) befindet, in Bezug zu den Außenseiten (2 und 6) der aerodynamischen Fläche (1) und der Klappe (3) nach innen ragt;
- der ganzheitlichen Einbuchtung (28) eine ganzheitliche flache Abdeckung (29) zugeordnet ist, deren Form der Form der ganzheitlichen Einbuchtung entspricht;
- die ganzheitliche Abdeckung (29) von einem Gestänge (18) getragen wird, das an die aerodynamische Fläche (1) und an die Klappe (3) angelenkt ist und so ausgebildet ist, dass:
. das Gestänge (18) die ganzheitliche Abdeckung (29) in eingefahrener Position der Klappe (3) in eine Verschlussposition zwingt, in der sich die ganzheitliche Abdeckung (29) in der ganzheitlichen Einbuchtung (28) befindet und somit die aerodynamische Kontinuität zwischen der aerodynamischen Fläche (1) und der Klappe (3) sicherstellt; und
. das Gestänge (18) die ganzheitliche Abdeckung (29) in ausgefahrener Position der Klappe (3) in eine nach außen versetzte Position zwingt, in der die ganzheitliche Abdeckung (29) die ganzheitliche Einbuchtung (28) freigibt, indem sie Drehbewegungen der Klappe (3) in Bezug zur aerodynamischen Fläche (1) erlaubt.

10. Aerodynamische Fläche nach Anspruch 9,
wobei die ganzheitliche Abdeckung (29) auf lösbare Weise am Gestänge befestigt ist.

11. Aerodynamische Fläche nach einem der Ansprüche 9 oder 10,
wobei die ganzheitliche Abdeckung (29) auf verstellbare Weise am Gestänge (18) befestigt ist.

12. Aerodynamische Fläche nach einem der Ansprüche 9 bis 11,
wobei die ganzheitliche Abdeckung (29) aus einer Gruppe von ganzheitlichen Abdeckungen unterschiedlicher Größen gewählt wird.

13. Aerodynamische Fläche nach einem der Ansprüche 9 bis 12,
wobei das Gestänge (18) Folgendes aufweist:
- mindestens eine erste Stange (19), die auf der einen Seite an die aerodynamische Fläche (1) angelenkt ist und auf der anderen Seite die ganzheitliche Abdeckung (28) trägt; und
- mindestens eine zweite Stange (20), die auf der einen Seite an die Klappe (3) und auf der anderen Seite an die erste Stange (19) angelenkt ist.

14. Aerodynamische Fläche nach Anspruch 13,
wobei die erste Stange (19) eine gewundene Form aufweist, die es ihr erlaubt, sich in ausgefahrener Position der Klappe um die Hinterkante (28R) der ganzheitlichen Einbuchtung (28) zu legen.

15. Aerodynamische Fläche nach einem der Ansprüche 9 bis 14,
wobei die Vorderkante der ganzheitlichen Abdeckung (28) eine Dichtung (25) aufweist, die fähig ist, in eingefahrener Position der Klappe den Spalt zu verschließen, der sich zwischen ihr selbst und der Hinterkante (28R) der ganzheitlichen Einbuchtung (28) befindet.

16. Aerodynamische Fläche nach einem der Ansprüche 9 bis 15,
wobei die Hinterkante der Abdeckung (28) eine Dichtung (26) aufweist, die fähig ist, in ausgefahrener Position der Klappe den Spalt zu verschließen, der sich zwischen ihr selbst und der Vorderkante (8) der Klappe (3) befindet.

## Claims

1. Aircraft aerodynamic surface (1) having at least one flap (3) and a device for articulating said flap (3) to said aerodynamic surface, said flap (3) having its front edge (8) facing a rear edge (9) of said aerodynamic surface and said articulation device comprising at least two fittings (11) bearing said flap (3) projecting forward with respect to said front edge (8) and able to pivot, under the action of actuating means (4), about a common axle (5) borne by said aerodynamic surface (1) and arranged at the interior side thereof, in order to cause said flap (3) to adopt:
- either a retracted position, for which the outer face (6) of said flap (3) is in the aerodynamic continuation of the outer face (2) of said aerodynamic surface (1);
- or at least one deployed position, for which said flap (3) is turned and projects with respect to the outer face (2) of said aerodynamic surface (1), said rear edge (9) of said aerodynamic surface (1) comprising cutouts (12) into which said fittings (11) project when said flap (3) is in the deployed position,
**characterized in that**:
- the portion (15) of each fitting (11) facing the corresponding cutout (12) when said flap (3) is in the retracted position is set back toward the inside with respect to the outer faces (2, 6) of the aerodynamic surface and of the flap;
- a flat blanking piece (16), the shape of which corresponds to that of said cutout (12) is associated with each cutout (12);
- each blanking piece (16) is borne by a linkage (18) articulated to said aerodynamic surface (1) and to said flap (3) so that:
• when said flap (3) is in the retracted position, said linkage (18) places said blanking piece (16) in a blanking position for which said blanking piece (16) is arranged in said cutout (12), ensuring aerodynamic continuity between said aerodynamic surface and said flap; and
• when said flap (3) is in the deployed position, said linkage (18) places said blanking piece (16) in an outwardly offset position for which said blanking piece (16) uncovers said cutout (12), allowing said flap (3) to turn with respect to said aerodynamic surface (1).

2. Aerodynamic surface according to Claim 1, **characterized in that** said blanking piece (16) is fixed removably to said linkage (18).

3. Aerodynamic surface according to either of Claims 1 and 2, **characterized in that** said blanking piece (16) is fixed adjustably to said linkage (18).

4. Aerodynamic surface according to one of Claims 1 to 3, **characterized in that** said blanking piece (16) is chosen from a set of blanking pieces of different sizes.

5. Aerodynamic surface according to one of Claims 1 to 4, **characterized in that** said linkage (18) comprises:
- at least one first connecting rod (19) articulated, at one end, to said aerodynamic surface (1) and bearing, at the other end, said blanking piece (16), and
- at least one second connecting rod (20) articulated, at one end, to said flap (3) and, at the other end, to said first connecting rod (19).

6. Aerodynamic surface according to Claim 5, **characterized in that** said first connecting rod (19) has a convoluted shape allowing it, when said flap (3) is in the deployed position, to go around the edge (12R) of the blind end of said cutout (12).

7. Aerodynamic surface according to any one of Claims 1 to 6, **characterized in that** the front edge of said blanking piece (16) bears a seal (25) able, when the flap (3) is in the retracted position, to blank off the slot there is between it and the edge of the blind end (12R) of said cutout (12).

8. Aerodynamic surface according to any one of Claims 1 to 7, **characterized in that** the rear edge of said blanking piece (16) bears a seal (26) able, when the flap (3) is in the retracted position, to blank off the slot there is between it and the front edge (8) of said flap (16).

9. Aircraft aerodynamic surface (1) having at least one flap (3) and a device for articulating said flap (3) to said aerodynamic surface, said flap (3) having its front edge (8) facing a rear edge (9) of said aerodynamic surface (1) and said articulation device comprising at least two fittings (11) bearing said flap (3) projecting forward with respect to said front edge (8) and able to pivot, under the action of actuating means (4), about a common axle (5) borne by said aerodynamic surface (1) and arranged at the interior side thereof, in order to cause said flap (3) to adopt:
- either a retracted position, for which the outer face (6) of said flap (3) is in the aerodynamic continuation of the outer face (2) of said aerodynamic surface (1);
- or at least one deployed position, for which said flap (3) is turned and projects with respect to the outer face (2) of said aerodynamic surface (1), said rear edge (9) of said aerodynamic surface (1) comprising cutouts (12) into which said fittings (11) project when said flap (3) is in the deployed position,
**characterized in that**:
- between at least two consecutive cutouts (12), said rear edge (9) of the aerodynamic surface (1) is cut away to form one global cutout (28);
- the portion (15) of each fitting (11) facing said global cutout (28) when said flap (3) is in the retracted position is set back toward the inside with respect to the outer faces (2 and 6) of the aerodynamic surface (1) and of the flap (3);
- a flat global blanking piece (29) the shape of which corresponds to that of said global cutout (28) is associated with said global cutout;
- said global blanking piece (29) is borne by a linkage (18) articulated to said aerodynamic surface (1) and to said flap (3) and such that:
• when said flap (3) is in the retracted position, said linkage (18) places said global blanking piece (29) in a blanking position for which said global blanking piece (29) is arranged in said global cutout (28), ensuring aerodynamic continuity between said aerodynamic surface (1) and said flap (3); and
• when said flap (3) is in the deployed position, said linkage (18) places said global blanking piece (29) in an outwardly offset position for which said global blanking piece (29) uncovers said global cutout (28), allowing said flap (3) to turn with respect to said aerodynamic surface (1).

10. Aerodynamic surface according to Claim 9, **characterized in that** said global blanking piece (29) is fixed removably to said linkage.

11. Aerodynamic surface according to either of Claims 9 and 10, **characterized in that** said global blanking piece (29) is fixed adjustably to said linkage (18).

12. Aerodynamic surface according to one of Claims 9 to 11, **characterized in that** said global blanking piece (29) is chosen from a set of global blanking pieces of different sizes.

13. Aerodynamic surface according to one of Claims 9 to 12, **characterized in that** said linkage (18) comprises:
- at least one first connecting rod (19) articulated, at one end, to said aerodynamic surface (1) and bearing, at the other end, said global blanking piece (28), and
- at least one second connecting rod (20) articulated, at one end, to said flap (3) and, at the other end, to said first connecting rod (19).

14. Aerodynamic surface according to Claim 13, **characterized in that** said first connecting rod (19) has a convoluted shape allowing it, when said flap is in the deployed position, to go around the edge of the blind end (28R) of said global cutout (28).

15. Aerodynamic surface according to any one of Claims 9 to 14, **characterized in that** the front edge of said global blanking piece (28) bears a seal (25) able, when the flap is in the retracted position, to blank of the slot there is between it and the edge of the blind end (28R) of said global cutout (28).

16. Aerodynamic surface according to any one of Claims 9 to 15, **characterized in that** the rear edge of said blanking piece (28) bears a seal (26) able, when the flap is in the retracted position, to blank off the slot there is between it and the front edge (8) of said flap (3).
